(19) Europäisches Patentamt
European Patent Office
Office européen des brevets

(11) **EP 4 625 668 A1**

(12) **EUROPEAN PATENT APPLICATION**
published in accordance with Art. 153(4) EPC

(43) Date of publication:
01.10.2025 Bulletin 2025/40

(21) Application number: 24792810.4

(22) Date of filing: 20.02.2024

(51) International Patent Classification (IPC):
*H01M 50/403* (2021.01)    *H01M 50/457* (2021.01)
*H01M 50/417* (2021.01)    *H01M 50/451* (2021.01)

(52) Cooperative Patent Classification (CPC):
Y02E 60/10

(86) International application number:
PCT/KR2024/002159

(87) International publication number:
WO 2024/219623 (24.10.2024 Gazette 2024/43)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.04.2023 KR 20230051128

(71) Applicants:
• W-Scope Korea Co., Ltd.
  Cheongju-si, Chungcheongbuk-do 28122 (KR)
• W-Scope Chungju Plant Co., Ltd.
  Daesowon-myeon
  Chungju-si, Chungcheongbuk-do
  27461 (KR)

(72) Inventors:
• PARK, Dae Bog
  Cheongju-si, Chungcheongbuk-do 28122 (KR)
• RYU, Kyoung Sun
  Cheongju-si, Chungcheongbuk-do 28122 (KR)
• CHOI, Kwang Ho
  Cheongju-si, Chungcheongbuk-do 28122 (KR)
• KIM, Woo Jin
  Cheongju-si, Chungcheongbuk-do 28122 (KR)
• KIM, Byung Hyun
  Cheongju-si, Chungcheongbuk-do 28122 (KR)
• KIM, Jeong Rae
  Cheongju-si, Chungcheongbuk-do 28122 (KR)

(74) Representative: BCKIP Part mbB
MK1
Landsbergerstraße 98, 3.Stock
80339 München (DE)

(54) **METHOD FOR MANUFACTURING SEPARATOR, AND SEPARATOR MANUFACTURED THEREBY**

(57) One aspect of the present invention provides a method for manufacturing a separator, comprising: (a) producing a first sheet by extruding a first composition comprising a first polyolefin and a first pore-forming agent; (b) producing a second sheet by extruding a second composition comprising a second polyolefin and a second pore-forming agent; (c) stretching the first and second sheets respectively in a machine direction (MD) to produce a first and a second precursor film; (d) laminating the first and second precursor films to obtain a laminate; (e) stretching the laminate in a transverse direction (TD), and then removing the first and second pore-forming agents from the laminate to obtain a dual-layer support comprising a first and a second layer respectively derived from the first and second precursor films; (f) forming functional layers by coating and drying a coating composition comprising a binder and a solvent on both sides of the dual-layer support; and (g) dividing the dual-layer support into two separators along the interface formed by the lamination.

FIG. 1

**Description**

**[Technical Field]**

The present invention relates to a method for manufacturing a separator and a separator manufactured by the method.

**[Background Art]**

Lithium secondary batteries are widely used as power sources for various electronic devices requiring miniaturization and weight reduction, such as smartphones, laptops, and tablet PCs. With the expansion of their application fields to medium- and large-sized batteries for smart grids and electric vehicles, there is an increasing demand for lithium secondary batteries with large capacity, long cycle life, and high safety.

As a means to achieve the above objectives, research and development have been actively conducted on separators having micropores that prevent internal short circuits by separating the anode and the cathode and allow smooth migration of lithium ions during charging and discharging. In particular, microporous separators using polyolefins such as polyethylene, which are suitable for pore formation via thermally induced phase separation (TIPS), economical, and capable of providing the desired physical properties for separators, have been extensively studied.

However, separators using polyethylene, which has a relatively low melting point of about 135°C, may undergo shrinkage or deformation at high temperatures exceeding the melting point due to heat generation from the battery. If such deformation causes a short circuit, it may lead to thermal runaway of the battery and result in safety issues such as ignition.

To improve the heat resistance of separators, so-called ceramic-coated separators, in which ceramic particles are coated onto the surface of a porous support, have been proposed. However, these ceramic-coated separators present significant technical challenges in terms of air permeability. Specifically, although coating a heat-resistant layer containing ceramic particles on the surface of the porous support improves thermal stability, the heat-resistant layer may clog the pores of the porous support, thereby reducing air permeability of the separator. Consequently, the ionic transport pathways between the electrodes are reduced, significantly degrading the charge and discharge performance of the battery.

Meanwhile, there have also been attempts to further improve adhesion to the electrode and extend the battery life by additionally forming an adhesive layer on the surface of the porous support and/or the surface of the heat-resistant layer, the adhesive layer having adhesion to the electrode.

In general, separators having functional layers such as a heat-resistant layer or an adhesive layer are manufactured by coating and drying a composition for forming the functional layers on one or both surfaces of a porous support while running the porous support at a constant speed.

In the case of conventional porous supports having a thickness of about 20 μm, workability in the coating process - specifically, mechanical properties and running stability - can be adequately maintained. However, with the recent increase in demand for high-capacity batteries, there is a trend toward reducing the thickness of porous supports to about 15 μm or less, or even to about 10 μm or less. As a result, mechanical properties and running stability of the porous support inevitably deteriorate. This leads to deformation such as wrinkling or sagging of the porous support during the coating and drying of the liquid composition for forming the functional layers, causing defects and failures in the separator. To address this issue, a method of reducing the running speed of the porous support during coating to improve workability has been proposed. However, since the running speed directly affects the productivity of the separator, this method significantly lowers manufacturing efficiency.

**[Detailed Description of the Invention]**

**[Technical Problem]**

The present invention has been devised to solve the above-described problems of the prior art, and an object of the present invention is to provide a method for manufacturing a separator including functional layers such as a heat-resistant layer and an adhesive layer coated on one surface of a porous support, and a separator manufactured by the method, which can achieve and improve both productivity and quality of the separator in a balanced manner.

**[Technical Solution]**

One aspect of the present invention provides a method for manufacturing a separator, comprising: (a) producing a first sheet by extruding a first composition comprising a first polyolefin and a first pore-forming agent; (b) producing a second sheet by extruding a second composition comprising a second polyolefin and a second pore-forming agent; (c) stretching the first and second sheets respectively in a machine direction (MD) to produce a first and a second precursor film; (d) laminating the first and second precursor films to obtain a laminate; (e) stretching the laminate in a transverse direction (TD), and then removing the first and second pore-forming agents from the laminate to obtain a dual-layer support comprising a first and a second layer respectively derived from the first and second precursor films; (f) forming functional layers by coating and drying a coating composition comprising a binder and a solvent on both sides of the dual-layer support; and (g) dividing the dual-layer support into two separators along the interface formed by the lamination.

In one embodiment, the first and second polyolefins may respectively comprise one selected from the group consisting of polyethylene, polypropylene, polybutylene, polymethylpentene, ethylene-vinyl acetate, ethylene-butyl acrylate, ethylene-ethyl acrylate, and combinations or copolymers of two or more thereof.

In one embodiment, the weight average molecular weight of each of the first and second polyolefins may be from 300,000 to 4,000,000.

In one embodiment, the ratio of the weight average molecular weight of the second polyolefin to that of the first polyolefin may be from 0.5 to 2.

In one embodiment, at least one of the first and second compositions may further comprise a hydrophilic polymer.

In one embodiment, the content of the hydrophilic polymer in at least one of the first and second compositions may be from 0.1 to 5 wt%.

In one embodiment, the hydrophilic polymer may comprise one selected from the group consisting of ethylene-vinyl acetate, ethylene-vinyl alcohol, polyvinyl alcohol, polyacrylic acid, polyoxyethylene-polyoxypropylene block copolymer, polyethylene glycol, polyethylene oxide, polyvinylpyrrolidone, polyvinyl acetal, polyvinyl butyral, cellulose derivatives, glycerol, and combinations of two or more thereof.

In one embodiment, during the lamination, the first and second precursor films may be pressed such that they face each other, and at least a portion of the interface between the first and second precursor films may be adhered.

In one embodiment, the thickness deviation of the first or second layer, measured according to the following formula, may be 10% or less:

$$\text{Thickness deviation (\%)} = \{(\text{Maximum thickness}) - (\text{Minimum thickness})\} / (\text{Minimum thickness}) \times 100 \qquad \text{<Formula>}$$

In the formula above, the thickness deviation is determined by: cutting the dual-layer support into 100 mm $\times$ 100 mm (MD $\times$ TD); dividing it into five equal parts in the machine direction to obtain five samples each having a size of 20 mm $\times$ 100 mm (MD $\times$ TD); measuring the thickness of the first or second layer at the center of the transverse direction (TD) of each sample; and calculating the deviation based on the maximum and minimum thickness values.

In one embodiment, the binder may comprise one selected from the group consisting of polyvinylidene fluoride, polyvinylidene fluoride-hexafluoropropylene, polyvinylidene fluoride-trichloroethylene, polymethyl methacrylate, polyacrylonitrile, polyvinylpyrrolidone, polyvinyl acetate, ethylene-vinyl acetate, polyimide, polyethylene oxide, cellulose acetate, cellulose acetate butyrate, cellulose acetate propionate, cyanoethyl pullulan, cyanoethyl polyvinyl alcohol, cyanoethyl cellulose, hydroxyethyl cellulose, cyanoethyl sucrose, pullulan, carboxymethyl cellulose, polyvinyl alcohol, polyvinyl butyral, acrylonitrile-acrylic acid copolymer, ethylene-acrylic acid copolymer, styrene-butadiene copolymer, alkyl acrylate-acrylonitrile copolymer, polyethylene glycol, acrylic rubber, and combinations of two or more thereof.

In one embodiment, the solvent may comprise one selected from the group consisting of methanol, ethanol, propanol, butanol, methoxyethanol, ethoxyethanol, lactone, acetonitrile, N-methyl-2-pyrrolidone (NMP), formic acid, nitromethane, acetic acid, dimethyl sulfoxide, water, and combinations of two or more thereof.

In one embodiment, the coating composition may further comprise one or more inorganic particles selected from the group consisting of $SiO_2$, $AlO(OH)$, $Mg(OH)_2$, $Al(OH)_3$, $TiO_2$, $BaTiO_3$, $Li_2O$, $LiF$, $LiOH$, $Li_3N$, $BaO$, $Na_2O$, $Li_2CO_3$, $CaCO_3$, $LiAlO_2$, $Al_2O_3$, $SiO$, $SnO$, $SnO_2$, $PbO_2$, $ZnO$, $P_2O_5$, $CuO$, $MoO$, $V_2O_5$, $B_2O_3$, $Si_3N_4$, $CeO_2$, $Mn_3O_4$, $Sn_2P_2O_7$, $Sn_2B_2O_5$, and $Sn_2BPO_6$.

Another aspect of the present invention provides a separator manufactured by the above-described method, wherein the separator satisfies at least one of the following conditions as measured by the following method: (i) fixing the center of a roll-wound separator to a first member, unrolling one end of the separator in the machine direction (MD) horizontally, and connecting it to a second member that fixes the separator in the horizontal direction; and (ii) confirming deformation of the separator and measuring vertical displacement after 1 hour under temperature of 25°C and humidity of 40%;

(1) no deformation and no vertical displacement of the separator; or (2) five or fewer sagging regions are formed vertically in the separator, and the distance between the fixed surface and the lowest point of the sagging region is 10% or less of the width of the separator in the transverse direction (TD).

**[Advantageous Effects of the Invention]**

The method for manufacturing a separator according to one aspect of the present invention comprises: (a) producing a first sheet by extruding a first composition comprising a first polyolefin and a first pore-forming agent; (b) producing a second sheet by extruding a second composition comprising a second polyolefin and a second pore-forming agent; (c) stretching the first and second sheets respectively in a machine direction (MD) to produce a first and a second precursor film; (d) laminating the first and second precursor films to obtain a laminate; (e) stretching the laminate in a transverse direction (TD), and then removing the first and second pore-forming agents from the laminate to obtain a dual-layer support comprising a first and a second layer respectively derived from the first and second precursor films; (f) forming functional layers by coating and drying a coating composition comprising a binder and a solvent on both sides of the dual-layer support; and (g) dividing the dual-layer support into two separators along the interface formed by the lamination; thereby enabling balanced improvement and implementation of both productivity and quality of the separator.

The effects of the present invention are not limited to those described above and should be understood to include all effects that can be derived from the constitution of the invention described in the detailed description or the claims.

**[Brief Description of the Drawings]**

FIG. 1 illustrates a method for manufacturing a separator according to an embodiment of the present invention.

FIG. 2 illustrates a method for manufacturing a dual-layer support (or separator) according to the prior art.

FIG. 3 illustrates a method for measuring the thickness deviation of a dual-layer support according to an embodiment of the present invention.

FIG. 4 illustrates a part of the separator manufacturing process according to an embodiment of the present invention.

FIG. 5 shows cross-sectional views of the dual-layer support and the two separated separators corresponding to regions A and B in FIG. 4.

FIG. 6 is a plan view of a dual-layer support according to an embodiment of the present invention.

FIG. 7 illustrates a method for measuring and evaluating the properties of a separator according to an embodiment of the present invention.

FIG. 8 illustrates a method for manufacturing a dual-layer support according to a comparative example of the present invention.

**[Modes of the Invention]**

Hereinafter, the present invention will be described with reference to the accompanying drawings. However, the present invention is not limited to the embodiments described herein and may be implemented in various other forms. In the drawings, parts irrelevant to the description are omitted for clarity, and like reference numerals are used for like components throughout the specification.

Throughout this specification, when a part is described as being "connected" to another part, it includes both "directly connected" and "indirectly connected" with another element interposed therebetween. Also, when a part "includes" a component, unless explicitly stated otherwise, it does not exclude the presence of other components but rather allows the inclusion of additional components.

Hereinafter, the embodiments of the present invention will be described in detail with reference to the accompanying drawings.

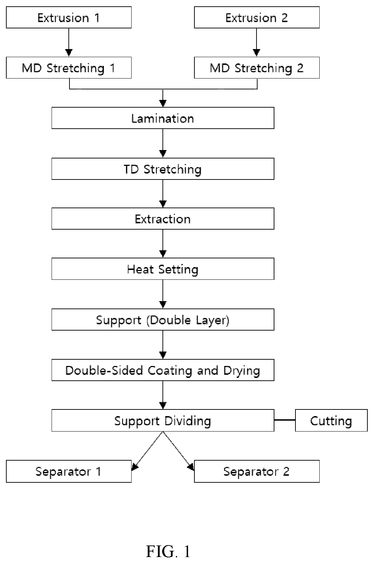

FIG. 1 illustrates a method for manufacturing a separator according to an embodiment of the present invention. Referring to FIG. 1, the method for manufacturing a separator according to one embodiment of the present invention may comprise: (a) producing a first sheet by extruding a first composition comprising a first polyolefin and a first pore-forming agent; (b) producing a second sheet by extruding a second composition comprising a second polyolefin and a second pore-forming agent; (c) stretching the first and second sheets respectively in a machine direction (MD) to produce a first and a second precursor film; (d) laminating the first and second precursor films to obtain a laminate; (e) stretching the laminate in a transverse direction (TD), and then removing the first and second pore-forming agents from the laminate to obtain a dual-layer support comprising a first and a second layer respectively derived from the first and second precursor films; (f) forming functional layers by coating and drying a coating composition comprising a binder and a solvent on both sides of the dual-layer support; and (g) dividing the dual-layer support into two separators along the interface formed by the lamination.

In steps (a) and (b), the first and second compositions, which may be identical or different, can be independently extruded to produce the first and second sheets, respectively. The extrusion may be carried out using two independently operated, parallely disposed extruders (a first extruder and a second extruder). The structure, configuration, specifications, and capacity of the first and second extruders may be the same, but may also be different if needed, to control and optimize the composition and physical properties of the first and second compositions and thus those of the first and second layers constituting the dual-layer support. In each of the first and second extruders, the respective compositions may be melted and kneaded, and discharged at a predetermined thickness through a device such as a T-die installed at the rear end of the extruder to form the first and second sheets.

Each of the first and second polyolefins may include one selected from the group consisting of polyethylene, polypropylene, polybutylene, polymethylpentene, ethylene-vinyl acetate, ethylene-butyl acrylate, ethylene-ethyl acrylate, and combinations or copolymers of two or more thereof; preferably polyethylene and/or polypropylene, and more preferably polyethylene, but the scope of the invention is not limited thereto.

The weight average molecular weight of each of the first and second polyolefins may be from 300,000 to 4,000,000, and the molecular weight distribution (Mw/Mn) may be from 3 to 7. The first and second polyolefins may be of the same kind and/or nature, or may be different, depending on the need. If the molecular weight distribution is less than 3, the dispersibility with the pore-forming agents may decrease, thereby lowering the uniformity of the resulting dual-layer support. If it exceeds 7, the mechanical properties of the dual-layer support may deteriorate. The terms "weight average molecular weight" and "molecular weight distribution" as used herein may refer to values measured by gel permeation chromatography (GPC) using polystyrene as a standard sample, according to methods described in the literature (e.g., Macromolecules, Vol. 34, No. 19, pp. 6812-6820 (2001)).

When the first and second polyolefins are heterogeneous, the first polyolefin may be a high-density polyethylene (HDPE) with a weight average molecular weight of 300,000 to 800,000, and the second polyolefin may be an ultra-high molecular weight polyethylene (UHMWPE) with a weight average molecular weight of 1,000,000 to 4,000,000. Generally, the HDPE contributes to mechanical properties such as tensile strength, elongation, and puncture strength, while the UHMWPE contributes to thermal resistance. Therefore, the combination of both may complementarily implement both mechanical properties and thermal resistance of the support. However, these effects are not necessarily complementary and, in some cases, mechanical and/or thermal properties may be further enhanced.

The ratio of the weight average molecular weight of the second polyolefin to that of the first polyolefin may be from 0.5 to 2, preferably from 0.65 to 1.5. If the ratio is less than 0.5 or more than 2, the difference in structural, mechanical, and/or thermal properties between the first and second layers derived from the first and second compositions in the dual-layer support may exceed acceptable levels, thereby reducing the commercial applicability of the battery.

The first and second pore-forming agents may each be paraffin oil having a kinematic viscosity of 50 to 100 cSt at 40°C. The pore-forming agents may be of the same or different types. If the kinematic viscosity of the pore-forming agents at 40°C falls outside the specified range, the viscosity of the compositions may become too low or too high, adversely affecting processability and dispersibility. Additionally, the pore-forming agents may include, besides paraffin oil, one selected from the group consisting of paraffin wax, mineral oil, solid paraffin, soybean oil, rapeseed oil, palm oil, coconut oil, di-2-ethylhexyl phthalate, dibutyl phthalate, diisononyl phthalate, diisodecyl phthalate, bis(2-propylheptyl) phthalate, naphthenic oil, and combinations of two or more thereof, but are not limited thereto. Each of the first and second compositions may include 20 to 50 wt% of the respective polyolefin and 50 to 80 wt% of the respective pore-forming agent.

The first and/or second composition may further comprise a hydrophilic polymer. Although a support made only of polyolefin is inherently hydrophobic, hydrophilicity can be imparted to the support by melt-kneading the polyolefin with a certain amount of hydrophilic polymer during manufacture. In this case, by determining and combining the molecular weight of the polyolefin and the content of the hydrophilic polymer in the support as variables to optimize the affinity of the support for the coating composition and thereby its coatability and impregnability, it is possible to implement in a balanced manner the productivity of the melt-kneading process for the hydrophilic polymer with the polyolefin, the hydrophilicity of the support, and the compatibility with the coating composition.

The layer of the dual-layer support containing the hydrophilic polymer may have a hydrophobic region comprising the polyolefin and a hydrophilic region comprising the hydrophilic polymer dispersed within the hydrophobic region. The content of the hydrophilic region in the layer may be from 0.1 to 7.5 wt%, and this may be achieved by adjusting the content of the hydrophilic polymer in the first or second composition to be within the range of 0.1 to 5 wt%.

In the layer, the hydrophobic region formed of the first or second polyolefin and the hydrophilic region formed of the hydrophilic polymer may respectively constitute a continuous phase and a discontinuous phase. The hydrophilic region may be uniformly dispersed in the matrix formed of the hydrophobic region, thereby imparting substantially uniform hydrophilicity throughout the entire area of the layer in both the planar and thickness directions. Accordingly, the impregnability of the layer with respect to a coating composition may be improved. As used in this specification, the term "matrix" refers to the component that forms the continuous phase in a layer or dual-layer support comprising two or more components. That is, in the layer, the hydrophobic region containing the polyolefin may form the continuous phase, and the hydrophilic region containing the hydrophilic polymer may be present as a discontinuous phase dispersed therein.

The content of the hydrophilic region in the layer may be from 0.1 to 7.5 wt%, preferably from 1 to 6 wt%, and more preferably from 3 to 6 wt%. If the content is less than 0.1 wt%, sufficient coatability and impregnability with the coating composition may not be achieved. If it exceeds 7.5 wt%, although coatability and impregnability may be further improved, the mechanical and thermal properties imparted by the polyolefin may deteriorate. Furthermore, if the content exceeds 7.5 wt%, dispersion of the hydrophilic polymer may become poor, resulting in an increased number of surface defects having different brightness from the surroundings and a size of 2 mm or more on the layer surface, thereby degrading appearance quality. Additionally, in areas where the hydrophilic polymer has agglomerated arbitrarily on or within the layer, the electrical resistance may sharply fluctuate, which can negatively affect the electrochemical performance of the battery.

In the case where the polyolefin mixed with the hydrophilic polymer is high-density polyethylene (HDPE), the weight average molecular weight of the polyethylene may be from 200,000 to 800,000, preferably from 250,000 to 600,000, and more preferably from 300,000 to 500,000. The ratio of the content of the hydrophilic region to the weight average molecular weight of the HDPE may be from $0.1 \times 10^{-5}$ to $1.1 \times 10^{-5}$, preferably from $0.2 \times 10^{-5}$ to $1.0 \times 10^{-5}$, and more preferably from $0.5 \times 10^{-5}$ to $1.0 \times 10^{-5}$.

If this ratio is less than $0.1 \times 10^{-5}$, sufficient impregnability with the coating composition may not be achieved. If it exceeds $1.1 \times 10^{-5}$, not only may impregnability be reduced, but also the mechanical and thermal properties of the support derived from HDPE may deteriorate. Moreover, a ratio exceeding $1.1 \times 10^{-5}$ may cause poor dispersion of the hydrophilic polymer, resulting in an increased number of surface defects with different brightness from the surroundings and a size of 2 mm or more, thereby degrading appearance quality. Additionally, in the areas where the hydrophilic polymer has randomly agglomerated on or within the support, sharp changes in resistance may occur, which can adversely affect the electrochemical properties of the battery.

On the other hand, in the case where the polyolefin mixed with the hydrophilic polymer is ultra-high molecular weight polyethylene (UHMWPE), the weight average molecular weight of the polyethylene may be from 1,000,000 to 4,000,000, preferably from 1,000,000 to 2,000,000. The ratio of the content of the hydrophilic region to the weight average molecular weight of the UHMWPE may be from $0.1 \times 10^{-5}$ to $0.75 \times 10^{-5}$, preferably from $0.15 \times 10^{-5}$ to $0.6 \times 10^{-5}$, and more preferably from $0.3 \times 10^{-5}$ to $0.6 \times 10^{-5}$.

If this ratio is less than $0.1 \times 10^{-5}$, sufficient coatability and impregnability with the coating composition may not be achieved. If it exceeds $0.75 \times 10^{-5}$, not only may coatability and impregnability be reduced, but also the mechanical and thermal properties of the support derived from UHMWPE may deteriorate. Moreover, if the ratio exceeds $0.75 \times 10^{-5}$, dispersion of the hydrophilic polymer may deteriorate, increasing the number of surface defects having different brightness from the surroundings and a size of 2 mm or more, thereby degrading appearance quality. In addition, in areas on or within the layer where the hydrophilic polymer has randomly agglomerated, rapid changes in resistance may occur, adversely affecting the electrochemical performance of the battery.

The hydrophilic polymer may comprise one selected from the group consisting of ethylene-vinyl acetate, ethylene-vinyl alcohol, polyvinyl alcohol, polyacrylic acid, polyoxyethylene-polyoxypropylene block copolymer, polyethylene glycol, polyethylene oxide, polyvinylpyrrolidone, polyvinyl acetal, polyvinyl butyral, cellulose derivatives, glycerol, and combinations of two or more thereof. Preferably, it may be ethylene-vinyl acetate, and more preferably, ethylene-vinyl acetate comprising 15 to 30 wt% of vinyl acetate. However, the present invention is not limited thereto. If the vinyl acetate content in the ethylene-vinyl acetate is less than 15 wt%, the mechanical properties and hydrophilicity of the support may deteriorate. If it exceeds 30 wt%, processability and dispersibility of the hydrophilic polymer may deteriorate. In addition to the above, various types of polymers having hydrophilic functional groups such as amine, amide, hydroxyl, and carboxylic acid groups in the main chain and/or side chain may be used as hydrophilic polymers.

Meanwhile, ethylene-vinyl acetate among the hydrophilic polymers may provide a soft property, i.e., a certain degree of flexibility, to the first and second polyolefins, thereby not only improving the elongation of the first and second layers derived from the first and second compositions and the dual-layer support including the same, but also contributing to enhancement of mechanical properties such as puncture strength by improving the interlayer adhesion of the first and second layers constituting the dual-layer support.

In step (c), the first and second sheets may be stretched in the machine direction (MD) to produce the first and second precursor films, respectively. The machine direction stretching of the first and second sheets may be carried out using first and second stretching units respectively installed at the rear ends of the first and second extruders.

Each of the first and second stretching units may be a device that stretches the first and second sheets discharged from the first and second extruders along the transport direction in the process line. The stretching direction by the first and second stretching units may be defined as the machine direction (MD). Each of the first and second stretching units may be a roll stretcher. The roll stretcher may include a plurality of rolls arranged along the sheet transport direction and may stretch the sheets in the MD at a predetermined draw ratio by rotating the rear rolls faster than the front rolls. The draw ratio of the first and second sheets may be 2 to 20 times, preferably 5 to 10 times, respectively. Additionally, the draw ratios of the first and second sheets may be the same or different. Preferably, the draw ratios may be set to be the same in consideration of the adhesion between the first and second precursor films prepared in step (c) and the resulting interlayer bonding strength, but are not limited thereto.

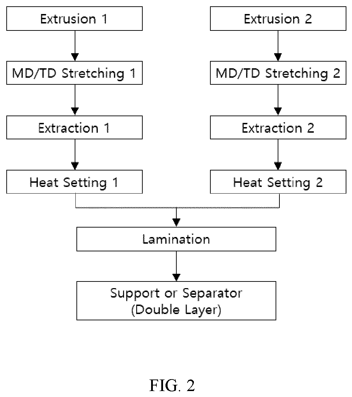

Referring to FIG. 2, in a conventional method of manufacturing a multi-layer support and/or separator by laminating two or more supports and/or separators that have been fully formed through extrusion, stretching, extraction, and heat setting, sufficient interlayer bonding strength cannot be achieved, and each layer may easily delaminate. To improve this, an additional step of restretching and heat-setting after lamination may be added; however, this increases equipment requirements and processing complexity, resulting in decreased productivity and economic feasibility.

In contrast, in step (d), the first and second precursor films may be laminated to obtain a laminate. The lamination may be performed using a predetermined laminator. The laminator may be a device that laminates the first and second precursor films produced by the first and second stretching units. During the lamination, the first and second precursor films may be pressed such that they face each other, and at least a portion of the interface between the first and second precursor films may be adhered.

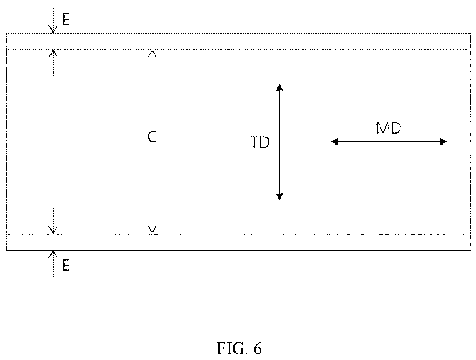

Referring to FIG. 6, during the lamination, the first and second precursor films may be pressed to face each other, and the lateral (TD) ends of the first and second precursor films may be bonded. The bonding may be achieved by applying a physical means such as heat, ultrasonic waves, high-frequency waves, or laser selectively to the lateral (TD) ends of the first and second precursor films. Through this bonding, the runnability and coating workability of the dual-layer support in the subsequent coating line can be improved, thereby more effectively preventing sagging and other deformation issues observed in conventional coated separators. The ratio of the area of the lateral (TD) ends of the first and second precursor films to the interface area may be from 0.01 to 0.1. If the ratio is less than 0.01, the runnability and coating workability cannot be sufficiently improved. Additionally, to facilitate smooth separation of the dual-layer support in a subsequent process, the lateral (TD) ends of the first and second layers may be cut and removed during the separation. The removed lateral (TD) ends are generally discarded, and if the area ratio exceeds 0.1, the amount of discarded material increases, thereby reducing productivity.

Additionally, during lamination, the first and second precursor films may be pressed to face each other, and the entire interface between them may be adhered. The bonding may be achieved by applying a physical means such as heat, ultrasonic waves, high-frequency waves, or laser across the entire surfaces of the first and second precursor films. Through this bonding, the runnability of the laminate and the dual-layer support through equipment for transverse (TD) stretching, extraction, heat setting, coating, and drying can be improved, thereby effectively resolving structural non-uniformities that appear in the outermost layer of conventional multilayer supports and/or separators, such as excessive variations in thickness or porosity.

In step (e), the laminate may be stretched in the transverse direction (TD), and then the first and second pore-forming agents may be removed from the laminate to obtain a dual-layer support comprising first and second layers respectively derived from the first and second precursor films.

The transverse (TD) stretching of the laminate may be performed using a third stretching unit. The third stretching unit may stretch the laminate in the transverse direction (TD), and may be a tenter stretcher. The tenter stretcher may stretch the laminate at a predetermined draw ratio by fixing both lateral ends of the laminate using certain members such as chucks or clips and moving the members apart in the transverse direction. The draw ratio in the transverse direction (TD) by the third stretching unit may be 2 to 20 times, preferably 5 to 10 times, but is not limited thereto.

Subsequently, a predetermined extraction solvent may be applied to the laminate to selectively extract and remove the first and second pore-forming agents from the laminate, specifically from the first and second precursor films constituting the laminate. The first and second pore-forming agents may be extracted and removed by immersing the laminate in an impregnation bath containing the extraction solvent for a predetermined time.

After extraction, the content of the residual pore-forming agents on and/or within the laminate may be 1 wt% or less. The extraction solvent may be, for example, methyl ethyl ketone, hexane, dichloromethane, etc., but is not limited thereto. The time required to extract and remove the first and second pore-forming agents may be determined according to the thickness and porosity of the laminate. When the laminate has a thickness of 1 to 15 $\mu$m and a porosity of 40 to 70 vol%, the extraction time may be 10 minutes or less, preferably 5 minutes or less.

Additionally, the laminate from which the first and second pore-forming agents have been extracted and removed may be heated to remove residual extraction solvent from the laminate. Some of the extraction solvent applied in step (e) may remain on and/or within the laminate. Since the residual extraction solvent may deteriorate the properties of the support in subsequent processes, the laminate may be heated to a temperature above the boiling point of the solvent to remove the residual extraction solvent.

The method for manufacturing a separator may further comprise, after step (e), step (e') of heat-setting the laminate. The heat-setting refers to a process in which the laminate is fixed while applying heat, thereby forcibly holding the laminate to relieve residual stress. Although higher heat-setting temperatures are favorable for reducing the shrinkage rate of the separator, specifically thermal shrinkage, excessively high temperatures may cause partial melting of the laminate, resulting in pore closure and reduced permeability. It is preferable that the heat-setting temperature be selected within a range where 10 to 30 wt% of the crystalline portion of the laminate melts. Selecting a heat-setting temperature within this range can prevent issues such as insufficient rearrangement of the polyolefin molecules in the laminate, which would otherwise lead to ineffective stress relief, and pore closure due to partial melting, which would decrease permeability. For example, the heat-setting temperature may be 120 to 140°C, preferably 123 to 135°C, and the heat-setting time may be 5 seconds to 1 minute.

In the dual-layer support, the thickness deviation of the first or second layer measured according to the following equation may be 10% or less, preferably 1 to 8.5%, and more preferably 3 to 6.5%:

Thickness Deviation (%) = {(Maximum Thickness) - (Minimum Thickness)} / (Minimum Thickness) $\times$ 100         \<Equation\>

**In** conventional methods for manufacturing multilayer supports and/or separators, lamination by co-extrusion is performed before pore structures are formed via stretching. As a result, structural and physical property non-uniformity may occur in each layer during subsequent film-forming processes such as stretching and extraction. Specifically, as the thickness deviation of the outermost layers of the multilayer support and/or separator increases by region, the mechanical properties of the support and/or separator may become non-uniform. Particularly, when assembling batteries using the multilayer support and/or separator, portions with significantly reduced thickness compared to surrounding areas may be easily damaged or broken. This problem is more prominent in thin-film separators (e.g., having a thickness of about 15 $\mu$m or less, preferably about 10 $\mu$m or less), which are increasingly required for high-capacity and highintegration battery designs.

Accordingly, the dual-layer support may be manufactured by stretching the laminate - obtained by laminating the first and second precursor films each having a predetermined pore structure formed by stretching in the machine direction (MD) - in the transverse direction (TD), and then extracting and removing the first and second pore-forming agents. As such, the structural properties of the first and second layers constituting the dual-layer support can be made uniform to reliably ensure mechanical properties, while minimizing the number of stretching units required to manufacture the dual-layer support, thereby improving productivity and economic feasibility.

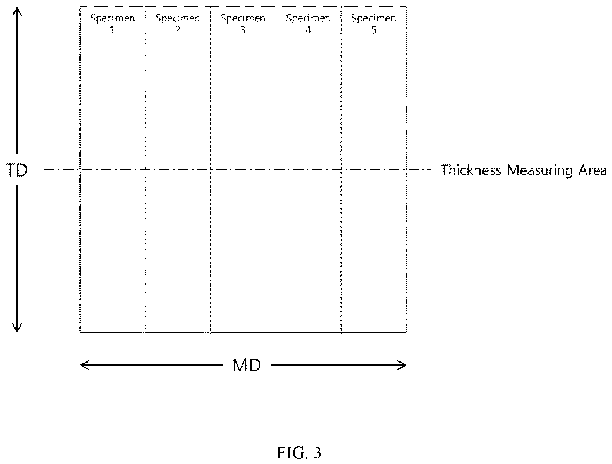

FIG. 3 illustrates a method for measuring thickness deviation of the dual-layer support according to one embodiment of the present invention. Referring to FIG. 3, the thickness deviation of the outermost layer may be calculated based on the thickness values of individual specimens measured by the following method and the equation provided above. Specifically, the thickness deviation is determined by: cutting the dual-layer support into a 100 mm $\times$ 100 mm (MD $\times$ TD) specimen; dividing the specimen into five equal parts along the machine direction (MD) to obtain five samples of 20 mm $\times$ 100 mm (MD $\times$ TD); measuring the thickness of the outermost layer at the center in the transverse direction (TD) of each sample; and calculating the deviation based on the maximum and minimum thickness values according to the equation.

The dual-layer support may satisfy at least one, and preferably all, of the following conditions (i) to (vi): (i) a thickness of 1 to 15 $\mu$m, preferably 5 to 12 $\mu$m; (ii) a puncture strength of 600 gf or more, preferably 650 to 1,000 gf, more preferably 700 to 900 gf; (iii) a tensile strength in the machine direction (MD) of 1,300 to 2,000 kgf/cm$^2$, preferably 1,400 to 1,800 kgf/cm$^2$; (iv) a tensile strength in the transverse direction (TD) of 3,000 to 6,000 kgf/cm$^2$, preferably 3,500 to 5,500 kgf/cm$^2$, more preferably 4,000 to 5,400 kgf/cm$^2$; (v) an elongation in the machine direction (MD) of 150 to 450%, preferably 200 to 400%, more preferably 230 to 350%; and (vi) an elongation in the transverse direction (TD) of 30 to 100%, preferably 40 to 90%.

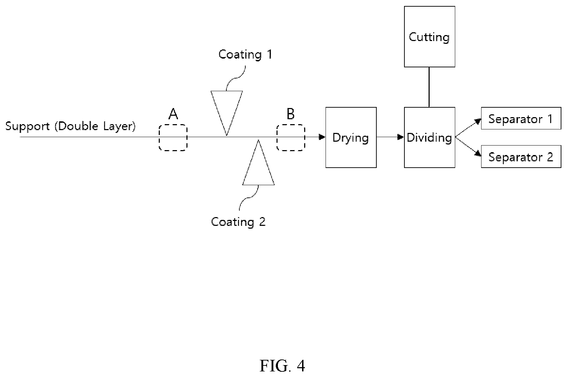

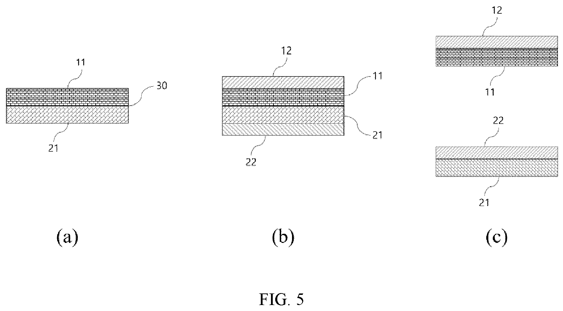

FIG. 4 illustrates a part of the separator manufacturing method according to one embodiment of the present invention, and FIG. 5 shows cross-sectional views of the dual-layer support and two separated separators corresponding to regions A and B in FIG. 4.

Referring to FIG. 4, the separator manufacturing method according to one embodiment of the present invention may include: (f) forming functional layers by coating and drying a coating composition comprising a binder and a solvent on both sides of the dual-layer support obtained in step (e); and (g) dividing the dual-layer support into two separators along the interface formed by the lamination.

FIG. 5(a) is a cross-sectional view of the dual-layer support taken along region A in FIG. 4. Referring to FIG. 5(a), the dual-layer support may include first and second layers that are laminated to face each other with a predetermined interface in between.

In step (f), a coating composition (slurry) comprising a binder and a solvent may be coated on both sides of the dual-layer support and dried to remove the solvent and other liquid residues contained in the coating composition, thereby forming functional layers. The coating compositions applied to both sides of the dual-layer support may be the same or different in composition and properties.

FIG. 5(b) is a cross-sectional view of the dual-layer support taken along region B in FIG. 4. Referring to FIGS. 4 and 5(b), the coating line for applying the coating composition may include: a first coater disposed above the dual-layer support and facing one side thereof; and a second coater disposed below the dual-layer support and facing the other side.

The upper surface of the first layer and the lower surface of the second layer may constitute the two surfaces of the dual-layer support. The first coater may apply a predetermined composition of coating to the upper surface of the first layer, which forms the upper layer of the dual-layer support, to form a first functional layer. The second coater may apply a predetermined composition of coating to the lower surface of the second layer, which forms the lower layer of the dual-layer support, to form a second functional layer.

Each of the first and second coaters may be selected from the group consisting of a roll coater, a bar coater, a spray coater, a die coater, a comma coater, and combinations of two or more thereof, and preferably may be a roll coater and/or a bar coater, but is not limited thereto.

The binder may be selected from the group consisting of polyvinylidene fluoride, polyvinylidene fluoride-hexafluoropropylene, polyvinylidene fluoride-trichloroethylene, polymethyl methacrylate, polyacrylonitrile, polyvinylpyrrolidone, polyvinyl acetate, ethylene-vinyl acetate, polyimide, polyethylene oxide, cellulose acetate, cellulose acetate butyrate, cellulose acetate propionate, cyanoethyl pullulan, cyanoethyl polyvinyl alcohol, cyanoethyl cellulose, hydroxyethyl cellulose, cyanoethyl sucrose, pullulan, carboxymethyl cellulose, polyvinyl alcohol, polyvinyl butyral, acrylonitrile-acrylic acid copolymer, ethylene-acrylic acid copolymer, styrene-butadiene copolymer, alkyl acrylate-acrylonitrile copolymer, polyethylene glycol, acrylic rubber, and combinations of two or more thereof; preferably, carboxymethyl cellulose and alkyl acrylate-acrylonitrile copolymer, but is not limited thereto. For example, in the functional layer, the carboxymethyl cellulose and alkyl acrylate-acrylonitrile copolymer may be present at a weight ratio of 1 : 0.5 to 1.5.

The coating composition may further comprise an inorganic particle selected from the group consisting of $SiO_2$, $AlO(OH)$, $Mg(OH)_2$, $Al(OH)_3$, $TiO_2$, $BaTiO_3$, $Li_2O$, $LiF$, $LiOH$, $Li_3N$, $BaO$, $Na_2O$, $Li_2CO_3$, $CaCO_3$, $LiAlO_2$, $Al_2O_3$, $SiO$, $SnO$, $SnO_2$, $PbO_2$, $ZnO$, $P_2O_5$, $CuO$, $MoO$, $V_2O_5$, $B_2O_3$, $Si_3N_4$, $CeO_2$, $Mn_3O_4$, $Sn_2P_2O_7$, $Sn_2B_2O_5$, $Sn_2BPO_6$, and combinations of two or more thereof, and the inorganic particle may contribute to improving the heat resistance of the functional layer and the separator. Preferably, the inorganic particle may be $Al_2O_3$ and/or $AlO(OH)$, but is not limited thereto.

The content of the inorganic particle in the functional layer may be 50 to 99 wt%. If the content of the inorganic particle is less than 50 wt%, the required level of heat resistance may not be achieved. If it exceeds 99 wt%, the dispersibility of the inorganic particles may be deteriorated, or the coating workability and processability may be reduced.

The inorganic particles tend to agglomerate due to electrostatic attraction. Such agglomeration may hinder the uniformity of physical properties on the surface of the separator. To address this, the coating composition may further include additives for improving the dispersibility of the inorganic particles, such as dispersants, surfactants, and the like. In particular, the coating composition may include sodium hexametaphosphate ($(NaPO_3)_6$) as a dispersant, and the content of sodium hexametaphosphate in the functional layer may be 0.01 to 1 wt%, preferably 0.01 to 0.5 wt%. Sodium hexametaphosphate may adsorb to the edge portions of the inorganic particles, especially plate-shaped ones, to weaken the negative charges at the edges, thereby effectively preventing agglomeration of the inorganic particles. As a result, it may improve the storage stability of the coating composition and the dispersibility of the inorganic particles within the functional layer.

To prepare an aqueous coating composition, the solvent may be selected from the group consisting of methanol, ethanol, propanol, butanol, methoxyethanol, ethoxyethanol, lactone, acetonitrile, N-methyl-2-pyrrolidone (NMP), formic acid, nitromethane, acetic acid, dimethyl sulfoxide, water, and combinations of two or more thereof; preferably, ethanol and water; and more preferably, a mixture of ethanol and water at a weight ratio of 1 : 10 to 50, although not limited thereto.

The coating composition may comprise 30 to 100 parts by weight of the inorganic particles and 1 to 20 parts by weight of the binder, based on 100 parts by weight of the solvent, and is preferably aqueous (i.e., water-based or water-soluble). The solid content of the coating composition may be adjusted to 20 to 50 wt%, preferably 30 to 40 wt%, in consideration of the balance between processability, workability, and heat resistance. In addition, the coating composition may further comprise a predetermined amount of dispersant, for example, 0.01 to 0.5 parts by weight of sodium hexametaphosphate.

The thicknesses of the functional layers formed on both surfaces, i.e., one surface and the opposite surface, of the dual-layer support may be the same or different. The thickness of the functional layer formed on either surface of the dual-layer support may be 1 to 10 $\mu$m. If the thickness of the functional layer is less than 1 $\mu$m, sufficient adhesion and heat resistance may not be obtained. If it exceeds 10 $\mu$m, the separator may become excessively thick, thereby hindering high capacity, miniaturization, and integration of the battery or device.

Meanwhile, in step (f), prior to coating the coating composition on both surfaces of the dual-layer support, the dual-layer support may be plasma-treated in the presence of a mixed gas comprising sulfur dioxide ($SO_2$) and oxygen ($O_2$). Through the plasma treatment, the surfaces of the first and second layers constituting the dual-layer support and/or the surfaces of the internal pores thereof may be hydrophilized, thereby improving the bonding strength between both surfaces of the dual-layer support and the coating composition. As a result, the durability of the separator, particularly long-term durability and heat resistance, may be significantly improved.

In the prior art, a wet process such as sulfonation by immersing the surface of the support in sulfuric acid for a certain period of time was mainly used to hydrophilize the surface. However, this wet process had to be carried out separately from the plasma treatment-either before or after-thereby complicating the process and producing a large amount of liquid waste. In contrast, in the present invention, the process gas used for the plasma treatment comprises not only conventional gases such as air, oxygen, and/or inert gas, but also a certain amount of sulfur dioxide gas. Therefore, without a separate wet process such as immersion in sulfuric acid, sulfonic functional groups such as -SO$_3$ may be formed on the surface and internal pores of the porous support through a single dry process, namely, the plasma treatment. This not only maximizes the hydrophilicity and ion conductivity of the porous support, but also simplifies the conventional complex process and is advantageous from an environmental perspective.

The mixed gas used as the process gas for the plasma treatment may comprise 50 to 90 vol% sulfur dioxide and 10 to 50 vol% oxygen, preferably 60 to 80 vol% sulfur dioxide and 20 to 40 vol% oxygen, and more preferably 70 to 80 vol% sulfur dioxide and 20 to 30 vol% oxygen. If the sulfur dioxide content in the mixed gas is less than 50 vol%, the support may not exhibit the required level of hydrophilicity. If it exceeds 90 vol%, the process may become unstable. The plasma treatment may be performed for 0.5 to 90 minutes, preferably 0.5 to 20 minutes. If the plasma treatment is performed for less than 0.5 minutes, the support may not be sufficiently hydrophilized or sulfonated. If it is performed for more than 90 minutes, the degree of hydrophilization or sulfonation may plateau, thereby reducing process efficiency.

In step (g), the dual-layer support may be divided into two separators along the interface formed by the lamination. FIG. 5(c) illustrates a cross-sectional view of the two separated separators. Referring to FIG. 5(c), the dual-layer support may be separated along the interface formed by the lamination into a first separator comprising a first functional layer formed by the first coater on one surface of the first layer, and a second separator comprising a second functional layer formed by the second coater on one surface of the second layer.

Steps (a) to (g) may be carried out continuously, and thereby, two single-sided coated separators may be simultaneously obtained through a single coating and drying line. Moreover, through 'n' coating and drying lines, it is of course possible to simultaneously produce '2n' single-sided coated separators. Accordingly, the method for manufacturing the separator not only offers excellent productivity, but also enables the properties of the separator to be implemented at a level equivalent to or greater than that of the conventional separators, based on the mechanical properties, runnability, and workability of the dual-layer support ensured in the coating and drying lines.

Another aspect of the present invention provides a separator manufactured by the method described above, wherein the properties of the separator are evaluated using the following method: (i) one end of the separator in the machine direction (MD) is unwound horizontally from a roll, with the center of the roll fixed to a first member, and connected to a second member that fixes the separator in the horizontal direction; and (ii) after 1 hour under conditions of 25°C and 40% relative humidity, deformation of the separator is observed, and vertical displacement due to the deformation is measured; wherein the separator satisfies at least one of the following conditions (1) and (2):

(1) no deformation or vertical displacement of the separator; (2) occurrence of five or fewer sagging regions in the vertical direction, and the distance between the surface fixed in the horizontal direction and the lowest point of the sagging region is 10% or less of the width of the separator in the transverse direction (TD).

As used in this specification, the term "sagging region" refers to an area in which the separator, which is fixed in the horizontal direction between the first and second members, partially and/or entirely sags due to gravity, causing a downward vertical displacement. The sagging region may occur along the machine direction (MD) and/or the transverse direction (TD), and its shape and dimensions are not particularly limited.

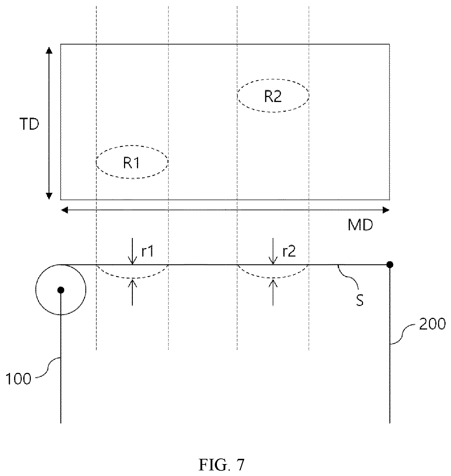

FIG. 7 illustrates a method for measuring and evaluating the properties of a separator according to one embodiment of the present invention. The separator may be either the first or the second separator obtained in step (g), and the compositions, thicknesses, and effects of the first and/or second layer and the first and/or second functional layer are as described above.

As demand for high-capacity batteries has increased in recent years, the thickness of the support has been trending toward reduction to approximately 15 μm or less. Due to such thinning, the mechanical properties of the support and, consequently, its runnability inevitably deteriorate. As a result, during the coating and drying process of the liquid coating composition used to form the functional layer, the support may undergo deformation such as wrinkling or sagging. If arbitrary wrinkling or sagging occurs in the separator comprising the support and the functional layer, not only may the assemblability with a battery be degraded, but also, during long-term storage, the distribution of materials such as the inorganic particles and binder in the functional layer may become non-uniform due to such deformation. This can cause local variation in the physical properties of the separator, thereby reducing product reliability.

Accordingly, in a separator including a functional layer formed by coating and drying a liquid coating composition, it is very important to uniformly implement and maintain, over time, the flatness of the separator and the resulting physical properties and structural stability.

The dual-layer support obtained through steps (a) to (e) can satisfy the mechanical properties, runnability, and coating workability required in step (f). Specifically, in the dual-layer support, the first and second layers complement each other in terms of thickness and the resulting mechanical properties. Therefore, even when the thicknesses of the first and second layers are controlled to be thin and/or the web speed in the coating line is increased to 80 m/min, preferably 100 m/min or more, sufficient coating workability can be secured.

Hereinafter, embodiments of the present invention will be described in detail.

Preparation Example 1

A first composition comprising 28 parts by weight of high-density polyethylene (HDPE) having a weight average molecular weight of 600,000 and 72 parts by weight of paraffin oil having a kinematic viscosity of 70 cSt at 40°C was fed into a twin-screw extruder (first extruder, inner diameter: 58 mm, L/D = 56). The first composition was discharged at a screw speed of 120 rpm and a temperature of 210°C through a T-die (400 mm wide), and then passed through a casting roll at 70°C to prepare a first sheet having a thickness of 800 $\mu$m.

A second composition identical to the first composition was fed into a second twin-screw extruder (second extruder), having the same configuration as the first extruder but arranged in parallel. The second composition was discharged under the same conditions (screw speed of 120 rpm, temperature of 210°C) through a 400 mm wide T-die, and then passed through a casting roll at 70°C to prepare a second sheet having a thickness of 800 $\mu$m.

The first and second sheets were respectively fed into first and second stretching units (roll stretchers) arranged in parallel, and stretched 8 times in the machine direction (MD) at 120°C to prepare the first and second precursor films. Here, the first and second stretching units refer to the stretchers installed at the rear ends of the first and second extruders, respectively.

The first and second precursor films were then fed into a laminator installed downstream of the first and second stretching units, and a laminate was obtained by laminating the films such that their surfaces were in face-to-face contact.

The laminate was fed into a third stretching unit (tenter stretcher), and stretched 9 times in the transverse direction (TD) at 126°C. Subsequently, the laminate was immersed for 1 minute in a dichloromethane extraction bath at 25°C to extract and remove the paraffin oil, and then dried at 38°C for 5 minutes. Thereafter, the laminate was stretched 1.5 times in the TD at 138°C and then relaxed by 10% to perform heat setting, thereby obtaining a dual-layer support comprising first and second layers respectively derived from the first and second precursor films.

Preparation Example 2

A dual-layer support was prepared in the same manner as in Preparation Example 1, except that the high-density polyethylene (HDPE) having a weight average molecular weight of 600,000 in the second composition was replaced with ultra-high molecular weight polyethylene (UHMWPE) having a weight average molecular weight of 1,000,000.

Preparation Example 3

A dual-layer support was prepared in the same manner as in Preparation Example 1, except that the second composition further included ethylene-vinyl acetate (EVA, manufactured by HTC) containing 28 wt% vinyl acetate, and the contents (parts by weight) of HDPE, EVA, and paraffin oil in the second composition were adjusted to 30.4 parts, 1.6 parts, and 68.0 parts, respectively.

Preparation Example 4

A dual-layer support was prepared in the same manner as in Preparation Example 3, except that the HDPE (Mw 600,000) in the second composition was replaced with UHMWPE having a weight average molecular weight of 1,000,000.

Preparation Example 5

A dual-layer support was prepared in the same manner as in Preparation Example 1, except that an additional step of bonding the entire interface of the laminate was performed by applying ultrasound at 50 kHz to the entire surface of the laminate during lamination.

Preparation Example 6

A dual-layer support was prepared in the same manner as in Preparation Example 2, except that an additional step of bonding the entire interface of the laminate was performed by applying ultrasound at 50 kHz to the entire surface of the laminate during lamination.

Preparation Example 7

A dual-layer support was prepared in the same manner as in Preparation Example 3, except that an additional step of bonding the entire interface of the laminate was performed by applying ultrasound at 50 kHz to the entire surface of the laminate during lamination.

Preparation Example 8

A dual-layer support was prepared in the same manner as in Preparation Example 4, except that an additional step of bonding the entire interface of the laminate was performed by applying ultrasound at 50 kHz to the entire surface of the laminate during lamination.

Preparation Example 9

A dual-layer support was prepared in the same manner as in Preparation Example 1, except that both transverse ends (TD) of the laminate, corresponding to 2% of the total interfacial area (planar area), were thermally bonded by heating. The bonded areas at both transverse ends of the laminate were symmetrical with respect to the transverse centerline.

Preparation Example 10

A dual-layer support was prepared in the same manner as in Preparation Example 9, except that the HDPE (Mw 600,000) in the second composition was replaced with UHMWPE having a weight average molecular weight of 1,200,000.

Preparation Example 11

A dual-layer support was prepared in the same manner as in Preparation Example 9, except that the HDPE (Mw 600,000) in the second composition was replaced with UHMWPE having a weight average molecular weight of 1,500,000.

Preparation Example 12

A dual-layer support was prepared in the same manner as in Preparation Example 9, except that the HDPE (Mw 600,000) in the second composition was replaced with UHMWPE having a weight average molecular weight of 2,000,000.

Preparation Example 13

A dual-layer support was prepared in the same manner as in Preparation Example 9, except that the HDPE (Mw 600,000) in the second composition was replaced with UHMWPE having a weight average molecular weight of 2,500,000.

Preparation Example 14

A dual-layer support was prepared in the same manner as in Preparation Example 9, except that the HDPE (Mw 600,000) in the second composition was replaced with UHMWPE having a weight average molecular weight of 3,700,000.

Preparation Example 15

A dual-layer support was prepared in the same manner as in Preparation Example 9, except that the HDPE (Mw 600,000) in the second composition was replaced with UHMWPE having a weight average molecular weight of 4,000,000.

Comparative Preparation Example 1

A first polyolefin solution was prepared by feeding 25 parts by weight of a mixture comprising 60 wt% of ultra-high molecular weight polyethylene (UHMWPE) having a weight average molecular weight (Mw) of 2,000,000 and 40 wt% of high-density polyethylene (HDPE) having an Mw of 560,000, together with 75 parts by weight of paraffin oil having a kinematic viscosity of 35 cSt at 40°C, into a twin-screw extruder (first extruder; inner diameter: 58 mm, L/D = 56), and melt-kneading under the conditions of a screw speed of 250 rpm and temperature of 230°C.

A second polyolefin solution was prepared by feeding 30 parts by weight of a mixture comprising 50 wt% of HDPE (Mw 560,000) and 50 wt% of polypropylene (Mw 1,600,000), along with 70 parts by weight of paraffin oil (35 cSt at 40°C), into a second twin-screw extruder having the same configuration as the first extruder, arranged in parallel, and melt-kneading under the same conditions.

The first and second polyolefin solutions were supplied from the first and second extruders to a tri-layer T-die and co-extruded to form a multilayer structure in which the layer thickness ratio of first/second/first polyolefin solution was 35/30/35. The resulting extrusion was cooled by passing it over a cooling roll (diameter: 500 mm) at 37°C to produce a gel-state tri-layer sheet. The gel-state tri-layer sheet was simultaneously biaxially stretched at 114°C at a ratio of 5×5 (MD×TD), then immersed in a dichloromethane extraction bath at 25°C for 5 minutes to extract and remove the paraffin oil, thereby obtaining a porous film. The porous film was then fed into a tenter stretcher, stretched 1.4 times in the transverse direction (TD) at 124°C, and heat-set to produce a tri-layer support.

Comparative Preparation Example 2

A base sheet was prepared by mixing 29.5 parts by weight of HDPE (Mw 350,000), 0.5 parts by weight of silane-modified HDPE, and 70 parts by weight of paraffin oil (70 cSt at 40°C), and feeding the mixture into a twin-screw extruder (inner diameter: 58 mm, L/D = 56). A crosslinking catalyst, dibutyltin dilaurate, was pre-dispersed in a portion of the paraffin oil and fed into the extruder via a side injector such that it constituted 0.5 wt% of the total weight of the materials passing through the extruder. The mixture was melt-extruded under the conditions of a screw speed of 40 rpm and a temperature of 200°C through a T-die (width: 300 mm), and then passed over a casting roll at 40°C to produce a base sheet with a thickness of 800 μm.

The base sheet was stretched 6 times in the machine direction (MD) using a roll stretcher at 110°C, and then stretched 7 times in the transverse direction (TD) using a tenter stretcher at 125°C to produce a film. The film was immersed in a dichloromethane extraction bath at 25°C for 1 minute to extract and remove the paraffin oil, and dried at 50°C for 5 minutes to produce a porous film. Thereafter, the film was heated to 125°C in a tenter stretcher and stretched 1.45 times in the TD, followed by relaxation to achieve a final extension ratio of 1.25× compared to before the last stretch, thereby performing heat setting. The resulting film was crosslinked in a thermohygrostatic chamber at 85°C and 85% relative humidity for 72 hours to produce a single-layer support.

Comparative Preparation Example 3

A mixture comprising 64 wt% of ultra-high molecular weight polyethylene (UHMWPE, Mw 1,000,000) and 36 wt% of UHMWPE (Mw 1,500,000) (30 parts by weight) was blended with 70 parts by weight of paraffin oil having a kinematic viscosity of 70 cSt at 40°C, and the blend was fed into a twin-screw extruder (inner diameter: 58 mm, L/D = 56). Under conditions of 40 rpm and 200°C, the mixture was extruded through a 300 mm wide T-die and passed over a casting roll at 40°C to produce a base sheet with a thickness of 800 μm.

The base sheet was stretched 6 times in the machine direction (MD) at 110°C using a roll stretcher, and then 7 times in the transverse direction (TD) at 125°C using a tenter stretcher to produce a film. The film was immersed in a dichloromethane extraction bath at 25°C for 1 minute to extract and remove the paraffin oil, and dried at 50°C for 5 minutes to form a porous film. The porous film was then heat-set by heating to 125°C and stretching 1.45 times in the TD using a tenter stretcher, followed by relaxation to a final extension ratio of 1.25×, thereby producing a single-layer support.

Comparative Preparation Example 4

A single-layer support was prepared in the same manner as in Comparative Preparation Example 3, except that the second composition was a mixture comprising 42 wt% of high-density polyethylene (HDPE, Mw 600,000) and 58 wt% of ultra-high molecular weight polyethylene (UHMWPE, Mw 1,500,000), blended with 70 parts by weight of paraffin oil (70 cSt at 40°C).

Comparative Preparation Example 5

A mixture comprising 90 wt% of UHMWPE (Mw 1,000,000) and 10 wt% of HDPE (Mw 380,000) (100 parts by weight) was fed into a twin-screw extruder (first extruder; inner diameter: 58 mm, L/D = 42). Paraffin oil (250 parts by weight) was introduced via the side injector of the extruder, and the mixture was melt-kneaded at 210°C and 100 rpm to prepare a first polyethylene solution.

Separately, a second polyethylene solution was prepared by feeding a mixture comprising 10 wt% of UHMWPE (Mw 1,000,000) and 90 wt% of HDPE (Mw 380,000) (100 parts by weight) into a second twin-screw extruder (inner diameter: 58 mm, L/D = 42), with 250 parts by weight of paraffin oil added via a side injector, under the same kneading conditions (210°C, 100 rpm).

The first and second polyethylene solutions were passed through a multiblock layer-forming device, where the two materials were alternately layered and extruded through a T-die to form a 20-layer multilayer structure.

The multilayer structure was cooled over a roll maintained at 40°C to produce a gel-state base sheet with a thickness of 1,100 μm. The base sheet was simultaneously biaxially stretched at 124°C at a ratio of 8×8 (MD×TD), then immersed in dichloromethane at 25°C for 10 minutes to extract the paraffin oil and dried at 50°C for 5 minutes to obtain a porous film. The porous film was then stretched 1.4 times in the TD at 125°C using a tenter stretcher, followed by heat setting to produce a multilayer support.

Comparative Preparation Example 6

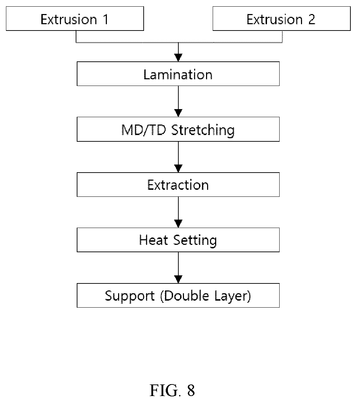

A support was prepared according to the method shown in FIG. 8. A first composition comprising 28 parts by weight of HDPE (Mw 600,000) and 72 parts by weight of paraffin oil (70 cSt at 40°C) was fed into a twin-screw extruder (first extruder; inner diameter: 58 mm, L/D = 56). The mixture was extruded under the conditions of 120 rpm and 210°C through a 400 mm wide T-die, then passed through a casting roll at 70°C to form a first sheet with a thickness of 800 μm.

A second composition identical to the first was fed into a second twin-screw extruder with the same configuration, arranged in parallel. Under the same extrusion conditions (120 rpm, 210°C), the second composition was extruded through a 400 mm wide T-die and cooled over a casting roll at 70°C to produce a second sheet with a thickness of 800 μm.

The first and second sheets were laminated in face-to-face contact using a laminator installed at the rear of the extruders, to obtain a laminate. The laminate was stretched 8 times in the machine direction (MD) at 120°C using a roll stretcher to form a precursor film. The precursor film was then stretched 9 times in the transverse direction (TD) at 126°C using a tenter stretcher, immersed in dichloromethane at 25°C for 1 minute to extract paraffin oil, and dried at 38°C for 5 minutes. Thereafter, the film was stretched 1.5 times in the TD at 138°C, followed by 10% relaxation and heat setting, to yield a dual-layer support.

Experimental Example 1

Each of the supports (single-layer, dual-layer, tri-layer, or multi-layer) prepared in the Preparation Examples and Comparative Preparation Examples was cut into a size of 100 mm × 100 mm. The cut support sample was then divided into five equal parts in the machine direction (MD), resulting in five specimens (Specimens 1 to 5) each having dimensions of 20 mm × 100 mm (MD × TD).

The cross-section of each specimen was photographed using scanning electron microscopy (SEM). Based on the SEM images, the thickness (μm) of the outermost layer at the center in the transverse direction (TD) of each specimen was measured. From these measurements, the thickness deviation was calculated according to the following formula and is shown in Table 1 below.

Thickness Deviation (%) = {(Maximum Thickness) - (Minimum Thickness)} / (Minimum Thickness) × 100          <Formula>

For Preparation Examples 1 to 8 and Comparative Preparation Example 6, the layer derived from the first composition was selected as the outermost layer. For Comparative Preparation Examples 1 and 5, the layer derived from the first polyolefin solution was selected as the outermost layer. The separators of Comparative Preparation Examples 2 to 4, being of single-layer structure, were excluded from this measurement.

[Table 1]

| Examples | Thickness (Specimen 1) | Thickness (Specimen 2) | Thickness (Specimen 3) | Thickness (Specimen 4) | Thickness (Specimen 5) | Thickness Deviation (%) |
|---|---|---|---|---|---|---|
| Preparation Example 1 | 5.10 | 5.02 | 4.98 | 5.23 | 4.83 | 8.28 |
| Preparation Example 2 | 5.09 | 5.45 | 5.32 | 5.27 | 5.29 | 7.07 |
| Preparation Example 3 | 5.05 | 5.07 | 5.30 | 5.35 | 5.17 | 5.94 |
| Preparation Example 4 | 5.51 | 5.49 | 5.77 | 5.54 | 5.57 | 5.10 |
| Preparation Example 5 | 5.07 | 5.02 | 5.05 | 5.00 | 5.23 | 4.60 |
| Preparation Example 6 | 5.30 | 5.17 | 5.10 | 5.20 | 5.17 | 3.92 |
| Preparation Example 7 | 5.17 | 5.28 | 5.17 | 5.10 | 5.20 | 3.53 |

(continued)

| Examples | Thickness (Specimen 1) | Thickness (Specimen 2) | Thickness (Specimen 3) | Thickness (Specimen 4) | Thickness (Specimen 5) | Thickness Deviation (%) |
|---|---|---|---|---|---|---|
| Preparation Example 8 | 5.35 | 5.27 | 5.45 | 5.32 | 5.29 | 3.42 |
| Preparation Example 9 | 5.48 | 5.32 | 5.21 | 5.28 | 5.41 | 5.18 |
| Preparation Example 10 | 5.23 | 5.30 | 5.29 | 5.21 | 5.41 | 3.84 |
| Preparation Example 11 | 5.47 | 5.61 | 5.30 | 5.31 | 5.44 | 5.85 |
| Preparation Example 12 | 5.51 | 5.32 | 5.31 | 5.20 | 5.47 | 5.96 |
| Preparation Example 13 | 5.55 | 5.33 | 5.41 | 5.09 | 5.50 | 9.04 |
| Preparation Example 14 | 5.29 | 5.35 | 5.32 | 4.98 | 5.34 | 7.41 |
| Preparation Example 15 | 5.32 | 4.99 | 5.32 | 5.17 | 5.17 | 6.61 |
| Comparative Preparation Example 1 | 3.45 | 3.23 | 3.57 | 3.33 | 3.28 | 10.53 |
| Comparative Preparation Example 5 | 0.98 | 0.91 | 0.93 | 0.95 | 0.87 | 12.64 |
| Comparative Preparation Example 6 | 4.72 | 4.88 | 5.02 | 5.26 | 4.76 | 11.44 |

Experimental Example 2

The thickness, puncture strength, tensile strength, and tensile elongation of the supports (single-layer, dual-layer, tri-layer, and multi-layer) prepared in the Preparation Examples and Comparative Preparation Examples were measured using the following methods. Unless otherwise specified, all measurements were performed at room temperature (25°C), and the results are summarized in Table 2 below.

- Thickness ($\mu$m): The thickness of the support specimen was measured using a precision thickness gauge.

- Puncture strength (gf): A puncture tester was used to apply force to a separator specimen with dimensions of 100 mm $\times$ 50 mm using a stick, and the force at which the sample was penetrated was recorded.

- Tensile strength ($kgf/cm^2$): A tensile strength tester was used to apply stress to a support specimen with dimensions of 20 mm $\times$ 200 mm in both the machine direction (MD) and the transverse direction (TD), and the stress at which breakage occurred was measured.

- Tensile elongation (%): A tensile strength tester was used to measure the elongation ratio of a support specimen (20 mm $\times$ 200 mm) in the machine direction (MD) and transverse direction (TD) until breakage occurred.

[Table 2]

| Examples | Thickness | Puncture strength | Tensile strength (MD) | Tensile strength (TD) | Tensile elongation (MD) | Tensile elongation (TD) |
|---|---|---|---|---|---|---|
| Preparation Example 1 | 10.2 | 637 | 1,534 | 4,050 | 273 | 80 |

(continued)

| Examples | Thickness | Puncture strength | Tensile strength (MD) | Tensile strength (TD) | Tensile elongation (MD) | Tensile elongation (TD) |
|---|---|---|---|---|---|---|
| Preparation Example 2 | 10.8 | 662 | 1,410 | 3,782 | 233 | 51 |
| Preparation Example 3 | 10.6 | 635 | 1,580 | 5,101 | 322 | 37 |
| Preparation Example 4 | 11.3 | 651 | 1,434 | 4,150 | 273 | 39 |
| Preparation Example 5 | 10.3 | 669 | 1,641 | 4,334 | 292 | 86 |
| Preparation Example 6 | 10.5 | 695 | 1,481 | 3,971 | 245 | 54 |
| Preparation Example 7 | 10.5 | 667 | 1,643 | 5,305 | 335 | 38 |
| Preparation Example 8 | 10.8 | 684 | 1,477 | 4,275 | 281 | 40 |
| Preparation Example 9 | 10.4 | 650 | 1,545 | 3,927 | 325 | 65 |
| Preparation Example 10 | 10.4 | 696 | 1,628 | 4,569 | 219 | 39 |
| Preparation Example 11 | 10.4 | 737 | 1,510 | 3,782 | 263 | 52 |
| Preparation Example 12 | 10.4 | 759 | 1,723 | 4,780 | 215 | 49 |
| Preparation Example 13 | 10.4 | 805 | 1,634 | 4,150 | 273 | 39 |
| Preparation Example 14 | 10.4 | 821 | 1,658 | 4,264 | 281 | 41 |
| Preparation Example 15 | 10.4 | 846 | 1,521 | 3,980 | 230 | 51 |
| Comparative Preparation Example 1 | 10.0 | 285 | 2,510 | 3,120 | 132 | 156 |
| Comparative Preparation Example 2 | 11.1 | 434 | 2,024 | 1,762 | 147 | 133 |
| Comparative Preparation Example 3 | 9.7 | 496 | 2,840 | 3,216 | 75 | 79 |
| Comparative Preparation Example 4 | 9.4 | 481 | 2,778 | 2,909 | 81 | 75 |
| Comparative Preparation Example 5 | 20.0 | 539 | 2,653 | 2,365 | 89 | 92 |
| Comparative Preparation Example 6 | 10.1 | 585 | 1,273 | 3,362 | 227 | 66 |

Reference Example

A water-dispersed ceramic slurry was prepared by mixing carboxymethyl cellulose salt (CMC), an acrylic-acrylonitrile copolymer latex, alumina (aluminum oxide, $Al_2O_3$), a dispersant ($(NaPO_3)_6$), a surfactant, water, and ethanol in the proportions shown in Table 3 below, followed by dispersion using a ball mill.

[Table 3]

| Component | Input amount (g) | Solid content (g) | Solid content (%) | Dry contetn (%) |
|---|---|---|---|---|
| Water | 1,500 | 0 | 0 | 0 |
| Ethanol | 70 | 0 | 0 | 0 |
| CMC | 27 | 27 | 100 | 3.3 |
| Acrylic-acrylonitrile copolymer latex | 70 | 31.5 | 45 | 3.9 |
| Alumina | 750 | 750 | 100 | 92.4 |
| $(NaPO_3)_6$ | 1.5 | 1.5 | 100 | 0.2 |
| Surfactant | 2 | 2 | 100 | 0.2 |
| Total | 2,421 | 812 | - | 100 |

Example 1

A ceramic-coated separator was prepared by applying the water-dispersed ceramic slurry of Reference Example to both surfaces of the dual-layer support of Preparation Example 1 using a 110-mesh coating roll via gravure coating, followed by drying in a hot air oven at 80°C for 1 hour to form a heat-resistant functional layer of 3 μm thickness on each side. The web speed of the laminated support along the coating roll in the machine direction (MD) was 120 m/min.

The laminated support was then divided along the interface formed by lamination to obtain: a first separator comprising the first layer and the functional layer (first functional layer) formed on one surface thereof, and a second separator comprising the second layer and the functional layer (second functional layer) formed on one surface thereof.

Example 2

Except that the support of Preparation Example 9 was used in place of the support of Preparation Example 1, the first and second separators were prepared in the same manner as in Example 1.

Example 3

Except that the support of Preparation Example 12 was used in place of the support of Preparation Example 1, the first and second separators were prepared in the same manner as in Example 1.

Example 4

Except that the support of Preparation Example 13 was used in place of the support of Preparation Example 1, the first and second separators were prepared in the same manner as in Example 1.

Example 5

Except that the support of Preparation Example 15 was used in place of the support of Preparation Example 1, the first and second separators were prepared in the same manner as in Example 1.

Comparative Example 1

A base sheet having a thickness of 900 μm was prepared by feeding 30 parts by weight of high-density polyethylene (HDPE) having a weight-average molecular weight (Mw) of 350,000 and a molecular weight distribution (Mw/Mn) of 5, and 70 parts by weight of paraffin oil (70 cSt at 40°C) into a twin-screw extruder (φ 58 mm, L/D = 56), extruding at 200°C and 40 rpm through a T-die (300 mm width), and passing through a casting roll at 40°C.

The base sheet was stretched 6 times in the MD using a roll stretcher at 110°C and 7 times in the TD using a tenter at 125°C. The film was immersed in dichloromethane at 25°C for 1 minute to extract the paraffin oil and dried at 50°C for 5 minutes to form a porous film. The porous film was heat-set at 130°C with 10% TD relaxation to produce a 9 μm thick single-layer support.

The water-dispersed ceramic slurry of Reference Example was coated on one side of the support using a 110-mesh coating roll via gravure coating and dried in a hot air oven at 80°C for 1 hour to form a 3 $\mu$m thick functional (heat-resistant) layer. The web speed in the MD was 80 m/min.

Comparative Example 2

Except that the web speed in the MD was changed to 100 m/min, the separator was prepared in the same manner as in Comparative Example 1.

Comparative Example 3

Except that the web speed in the MD was changed to 120 m/min, the separator was prepared in the same manner as in Comparative Example 1.

Comparative Example 4

A base sheet having a thickness of 500 $\mu$m was prepared by feeding 30 parts by weight of high-density polyethylene (HDPE) having a weight-average molecular weight (Mw) of 350,000 and a molecular weight distribution (Mw/Mn) of 5, and 70 parts by weight of paraffin oil (70 cSt at 40°C) into a twin-screw extruder ($\varphi$ 58 mm, L/D = 56), extruding at 200°C and 40 rpm through a T-die (300 mm width), and passing through a casting roll at 40°C.

The base sheet was stretched 6 times in the MD using a roll stretcher at 110°C and 7 times in the TD using a tenter at 125°C. The film was immersed in dichloromethane at 25°C for 1 minute to extract the paraffin oil and dried at 50°C for 5 minutes to form a porous film. The porous film was heat-set at 130°C with 10% TD relaxation to produce a 5 $\mu$m thick single-layer support.

A separator was then prepared in the same manner as in Comparative Example 1 by applying a water-dispersed ceramic slurry according to the Reference Example on one side of the support, except that the thickness of the functional layer (heat-resistant layer) formed on one side of the support was changed to 2.5$\mu$m.

Comparative Example 5

Except that the web speed in the MD was changed to 100 m/min, the separator was prepared in the same manner as in Comparative Example 4.

Comparative Example 6

A base sheet having a thickness of 400 $\mu$m was prepared by feeding 30 parts by weight of high-density polyethylene (HDPE) having a weight-average molecular weight (Mw) of 350,000 and a molecular weight distribution (Mw/Mn) of 5, and 70 parts by weight of paraffin oil (70 cSt at 40°C) into a twin-screw extruder ($\varphi$ 58 mm, L/D = 56), extruding at 200°C and 40 rpm through a T-die (300 mm width), and passing through a casting roll at 40°C.

The base sheet was stretched 6 times in the MD using a roll stretcher at 110°C and 7 times in the TD using a tenter at 125°C. The film was immersed in dichloromethane at 25°C for 1 minute to extract the paraffin oil and dried at 50°C for 5 minutes to form a porous film. The porous film was heat-set at 130°C with 10% TD relaxation to produce a 4 $\mu$m thick single-layer support.

A separator was then prepared in the same manner as in Comparative Example 1 by applying a water-dispersed ceramic slurry according to the Reference Example on one side of the support, except that the thickness of the functional layer (heat-resistant layer) formed on one side of the support was changed to 2$\mu$m.

Experimental Example 3

The thickness and thermal shrinkage of the separators prepared in the above Examples and Comparative Examples were measured using the following methods. Unless otherwise specified, measurements were conducted at room temperature (25 °C), and the results are summarized in Table 4 below.

- Thickness ($\mu$m): The thickness of each separator specimen was measured using a precision thickness gauge.
- Thermal Shrinkage (%): A separator specimen with dimensions of 200 mm $\times$ 200 mm was sandwiched between A4-sized sheets of paper and left in an oven at 150 °C for 1 hour. The specimen was then cooled to room temperature, and the shrinkage in both the machine direction (MD) and transverse direction (TD) was measured. The thermal shrinkage was calculated using the following equation:

$$\text{Thermal Shrinkage (\%)} = (l_3\text{-}l_4)/l_3 \times 100$$

(In the above equation, $l_3$ is the length of the specimen before shrinkage, and $l_4$ is the length after shrinkage, measured in either the MD or TD.)

[Table 4]

| Examples | Thickness (porous support) | Thickness (functional layer) | Thermal Shrinkage (MD) | Thermal Shrinkage (TD) |
|---|---|---|---|---|
| Example 1 (First separator) | 5.1 | 3 | 1.8 | 1.3 |
| Example 1 (Second separator) | 5.1 | 3 | 1.7 | 1.3 |
| Example 2 (First separator) | 5.2 | 3 | 1.5 | 1.2 |
| Example 2 (Second separator) | 5.2 | 3 | 1.3 | 1.2 |
| Example 3 (First separator) | 5.5 | 3 | 1.5 | 1.8 |
| Example 3 (Second separator) | 4.9 | 3 | 1.9 | 1.7 |
| Example 4 (First separator) | 5.5 | 3 | 1.5 | 1.3 |
| Example 4 (Second separator) | 4.9 | 3 | 2.4 | 1.9 |
| Example 5 (First separator) | 5.4 | 3 | 1.6 | 1.5 |
| Example 5 (Second separator) | 5.0 | 3 | 3.1 | 2.7 |
| Comparative Example 1 | 9 | 3 | 1.8 | 1.3 |
| Comparative Example 2 | 9 | 3 | 2.3 | 1.3 |
| Comparative Example 3 | 9 | 3 | 2.5 | 1.4 |
| Comparative Example 4 | 5 | 2.5 | 2.1 | 1.6 |
| Comparative Example 5 | 5 | 2.5 | 2.1 | 1.6 |
| Comparative Example 6 | 4 | 2 | 2.4 | 1.8 |

Experimental Example 4

In each of the separators prepared in the above Examples and Comparative Examples, the center of the separator roll was fixed to a transfer cart, and one end of the separator in the machine direction (MD) was unwound horizontally and connected to a jig that secured the separator in the horizontal direction (refer to Fig. 7).
Under conditions of 25 °C and 40% relative humidity, the deformation of the separator was observed after 1 hour, and the vertical displacement caused by the deformation was measured. The sagging characteristics of the separator due to deformation were evaluated based on the following criteria, and the results are shown in Table 5.
- Excellent (◎): No deformation or vertical displacement of the separator was observed.
- Good (○): Five or fewer sagging regions occurred in the vertical direction, and the distance between the fixed horizontal plane of the separator and the lowest point of the sagging region was less than or equal to 10% of the width (TD) of the separator.
- Poor (X): Does not meet the criteria for Excellent or Good.

[Table 5]

| Examples | Sagging characteristics |
|---|---|
| Example 1 (First separator) | ◎ |
| Example 1 (Second separator) | ◎ |
| Example 2 (First separator) | ◎ |
| Example 2 (Second separator) | ◎ |
| Example 3 (First separator) | ◎ |

(continued)

| Examples | Sagging characteristics |
|---|---|
| Example 3 (Second separator) | ◎ |
| Example 4 (First separator) | ◎ |
| Example 4 (Second separator) | ◎ |
| Example 5 (First separator) | ◎ |
| Example 5 (Second separator) | ◎ |
| Comparative Example 1 | ◎ |
| Comparative Example 2 | X |
| Comparative Example 3 | X |
| Comparative Example 4 | ○ |
| Comparative Example 5 | X |
| Comparative Example 6 | X |

The foregoing description of the present invention is provided for illustrative purposes only. It will be understood by those skilled in the art to which the present invention pertains that various modifications and alterations can be made without departing from the spirit or essential characteristics of the invention. Therefore, the embodiments described above are to be understood in all respects as illustrative and not restrictive.

For example, components described as being implemented in a singular form may also be implemented in a distributed manner, and likewise, components described as being distributed may also be implemented in a combined form.

The scope of the present invention is defined by the following claims, and all modifications or alterations derived from the meaning and scope of the claims and their equivalents are to be interpreted as being included within the scope of the present invention.

**<Description of Reference Numerals>**

11: First layer
12: First functional layer
21: Second layer
22: Second functional layer
30: Interface
C: Central region of the double-layer support
E: Transverse edge of the double-layer support
S: Separator
100: First member
200: Second member
R1, R2: Sagging regions
r1, r2: Depth of sagging regions

**Claims**

1.  A method for manufacturing a separator, comprising:

    (a) producing a first sheet by extruding a first composition comprising a first polyolefin and a first pore-forming agent;
    (b) producing a second sheet by extruding a second composition comprising a second polyolefin and a second pore-forming agent;
    (c) stretching the first sheet and the second sheet respectively in a machine direction (MD) to produce a first precursor film and a second precursor film;

(d) laminating the first precursor film and the second precursor film to obtain a laminate;

(e) stretching the laminate in a transverse direction (TD), and then removing the first pore-forming agent and the second pore-forming agent from the laminate to obtain a dual-layer support comprising a first layer and a second layer each derived from the first precursor film and the second precursor film, respectively;

(f) forming functional layers by coating and drying a coating composition comprising a binder and a solvent on both sides of the dual-layer support; and

(g) dividing the dual-layer support into two separators along the interface formed by the lamination.

2. The method for manufacturing a separator according to claim 1,
wherein the first polyolefin and the second polyolefin each comprise one selected from the group consisting of polyethylene, polypropylene, polybutylene, polymethylpentene, ethylene-vinyl acetate, ethylene-butyl acrylate, ethylene-ethyl acrylate, and combinations or copolymers of two or more thereof.

3. The method for manufacturing a separator according to claim 2,
wherein the weight average molecular weight of each of the first polyolefin and the second polyolefin is from 300,000 to 4,000,000.

4. The method for manufacturing a separator according to claim 3,
wherein the ratio of the weight average molecular weight of the second polyolefin to that of the first polyolefin is from 0.5 to 2.

5. The method for manufacturing a separator according to claim 1,
wherein at least one of the first composition and the second composition further comprises a hydrophilic polymer.

6. The method for manufacturing a separator according to claim 5,
wherein the content of the hydrophilic polymer in at least one of the first composition and the second composition is from 0.1 to 5% by weight.

7. The method for manufacturing a separator according to claim 5,
wherein the hydrophilic polymer comprises one selected from the group consisting of ethylene-vinyl acetate, ethylene-vinyl alcohol, polyvinyl alcohol, polyacrylic acid, polyoxyethylene-polyoxypropylene block copolymer, polyethylene glycol, polyethylene oxide, polyvinylpyrrolidone, polyvinyl acetal, polyvinyl butyral, cellulose derivatives, glycerol, and combinations of two or more thereof.

8. The method for manufacturing a separator according to claim 1,
wherein, during the lamination, the first precursor film and the second precursor film are pressed such that they face each other, and at least a portion of the interface between the first precursor film and the second precursor film is adhered.

9. The method for manufacturing a separator according to claim 1,
wherein the thickness deviation of the first layer or the second layer as measured by the following formula is 10% or less:

$$\text{Thickness Deviation (\%)} = \{(\text{Maximum Thickness}) - (\text{Minimum Thickness})\} / (\text{Minimum Thickness}) \times 100 \qquad \text{<Formula>}$$

wherein the thickness deviation is determined by: cutting the dual-layer support into 100 mm $\times$ 100 mm (MD $\times$ TD); dividing it into five equal parts in the machine direction to obtain five samples each having a size of 20 mm $\times$ 100 mm (MD $\times$ TD); measuring the thickness of the first layer or the second layer at the center in the transverse direction (TD) of each sample; and calculating the deviation based on the maximum and minimum thickness values.

10. The method for manufacturing a separator according to claim 1,
wherein the binder comprises one selected from the group consisting of polyvinylidene fluoride, polyvinylidene fluoride-hexafluoropropylene, polyvinylidene fluoride-trichloroethylene, polymethyl methacrylate, polyacrylonitrile, polyvinylpyrrolidone, polyvinyl acetate, ethylene-vinyl acetate, polyimide, polyethylene oxide, cellulose acetate, cellulose acetate butyrate, cellulose acetate propionate, cyanoethyl pullulan, cyanoethyl polyvinyl alcohol, cyanoethyl cellulose, hydroxyethyl cellulose, cyanoethyl sucrose, pullulan, carboxymethyl cellulose, polyvinyl alcohol, polyvinyl butyral, acrylonitrile-acrylic acid copolymer, ethylene-acrylic acid copolymer, styrene-butadiene copolymer, alkyl acrylate-acrylonitrile copolymer, polyethylene glycol, acrylic rubber, and combinations of two or more thereof.

11. The method for manufacturing a separator according to claim 1,
wherein the solvent comprises one selected from the group consisting of methanol, ethanol, propanol, butanol, methoxyethanol, ethoxyethanol, lactone, acetonitrile, N-methyl-2-pyrrolidone (NMP), formic acid, nitromethane, acetic acid, dimethyl sulfoxide, water, and combinations of two or more thereof.

12. The method for manufacturing a separator according to claim 1,
wherein the coating composition further comprises one or more inorganic particles selected from the group consisting of $SiO_2$, $AlO(OH)$, $Mg(OH)_2$, $Al(OH)_3$, $TiO_2$, $BaTiO_3$, $Li_2O$, $LiF$, $LiOH$, $Li_3N$, $BaO$, $Na_2O$, $Li_2CO_3$, $CaCO_3$, $LiAlO_2$, $Al_2O_3$, $SiO$, $SnO$, $SnO_2$, $PbO_2$, $ZnO$, $P_2O_5$, $CuO$, $MoO$, $V_2O_5$, $B_2O_3$, $Si_3N_4$, $CeO_2$, $Mn_3O_4$, $Sn_2P_2O_7$, $Sn_2B_2O_5$, and $Sn_2BPO_6$.

13. A separator manufactured by the method according to any one of claims 1 to 12,
wherein the separator satisfies at least one of the following conditions as measured by the method comprising:

(i) fixing the center of a roll-wound separator to a first member, unrolling one end of the separator in the machine direction (MD) horizontally, and attaching it to a second member that fixes the separator in the horizontal direction; and
(ii) after 1 hour under temperature of 25°C and humidity of 40%, confirming deformation of the separator and measuring vertical displacement due to the deformation;
(1) No deformation and no vertical displacement of the separator; or
(2) Five or fewer sagging regions occur vertically in the separator, and the distance between the fixed surface in the horizontal direction and the lowest point of the sagging region is 10% or less of the separator width in the transverse direction (TD).

FIG. 1

FIG. 2

FIG. 3

FIG. 4

(a)  (b)  (c)

FIG. 5

FIG. 6

FIG. 7

```
┌─────────────────────┐         ┌─────────────────────┐
│     Extrusion 1     │         │     Extrusion 2     │
└─────────────────────┘         └─────────────────────┘
            └──────────────┬──────────────┘
                           ▼
              ┌─────────────────────────┐
              │       Lamination        │
              └─────────────────────────┘
                           │
                           ▼
              ┌─────────────────────────┐
              │     MD/TD Stretching    │
              └─────────────────────────┘
                           │
                           ▼
              ┌─────────────────────────┐
              │       Extraction        │
              └─────────────────────────┘
                           │
                           ▼
              ┌─────────────────────────┐
              │      Heat Setting       │
              └─────────────────────────┘
                           │
                           ▼
              ┌─────────────────────────┐
              │  Support (Double Layer) │
              └─────────────────────────┘
```

FIG. 8

EP 4 625 668 A1

# INTERNATIONAL SEARCH REPORT

| | International application No. |
|---|---|
| | **PCT/KR2024/002159** |

**A. CLASSIFICATION OF SUBJECT MATTER**

**H01M 50/403**(2021.01)i; **H01M 50/457**(2021.01)i; **H01M 50/417**(2021.01)i; **H01M 50/451**(2021.01)i

According to International Patent Classification (IPC) or to both national classification and IPC

**B. FIELDS SEARCHED**

Minimum documentation searched (classification system followed by classification symbols)

H01M 50/403(2021.01); B29C 48/00(2019.01); B29C 48/08(2019.01); B29C 55/02(2006.01); C08J 9/26(2006.01); H01M 10/0525(2010.01); H01M 10/0568(2010.01); H01M 2/14(2006.01); H01M 2/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 분리막(separating layer), 기공(pore), 적층(stack), 연신(stretch), 코팅(coat), 분할 (divide)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2014-0147416 A (LG CHEM, LTD.) 30 December 2014 (2014-12-30)<br>See paragraphs [0019]-[0041], claims 10-24 and figures 1-2. | 1-13 |
| Y | KR 10-2015-0091973 A (SK INNOVATION CO., LTD.) 12 August 2015 (2015-08-12)<br>See paragraphs [0022]-[0075], claim 9 and figure 1. | 1-13 |
| Y | KR 10-2020-0085406 A (LG CHEM, LTD.) 15 July 2020 (2020-07-15)<br>See paragraph [0115] and claims 1-2. | 5-7 |
| Y | KR 10-2014-0119019 A (TORAY BATTERY SEPARATOR FILM CO., LTD.) 08 October 2014 (2014-10-08)<br>See paragraphs [0098]-[0123], claim 15 and figure 3. | 13 |
| A | CN 109065817 A (SHENZHEN BOSHENG NEW MATERIAL CO., LTD.) 21 December 2018 (2018-12-21)<br>See paragraphs [0049]-[0057]. | 1-13 |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 May 2024** | **23 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2024/002159**

| Patent document cited in search report | | | Publication date (day/month/year) | Patent family member(s) | | | Publication date (day/month/year) |
|---|---|---|---|---|---|---|---|
| KR | 10-2014-0147416 | A | 30 December 2014 | KR | 10-1792749 | B1 | 31 October 2017 |
| KR | 10-2015-0091973 | A | 12 August 2015 | | None | | |
| KR | 10-2020-0085406 | A | 15 July 2020 | | None | | |
| KR | 10-2014-0119019 | A | 08 October 2014 | CN | 104011121 | A | 27 August 2014 |
| | | | | CN | 104011121 | B | 13 June 2017 |
| | | | | JP | 6013368 | B2 | 25 October 2016 |
| | | | | JP | WO2013-099539 | A1 | 30 April 2015 |
| | | | | KR | 10-2057743 | B1 | 19 December 2019 |
| | | | | WO | 2013-099539 | A1 | 04 July 2013 |
| CN | 109065817 | A | 21 December 2018 | CN | 109065817 | B | 08 April 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Macromolecules*, 2001, vol. 34 (19), 6812-6820